# EUROPÄISCHE PATENTANMELDUNG

(11) **EP 1 253 409 A1**
(43) Veröffentlichungstag der Anmeldung: **30.10.2002**
(21) Anmeldenummer: 01110378.5
(22) Anmeldetag: 26.04.2001
(51) Int. Cl.: G01F 1/84

(54) **Magnetkreisanordnung für einen Messwertaufnehmer**

(71) Anmelder: Endress + Hauser Flowtec AG, CH-4153 Reinach BL 1 (CH)
(72) Erfinder: Bitto, Ennio, 4147 Aesch (BL) (CH); Schütze, Christian, 4054 Basel (BS) (CH)

(57) **Zusammenfassung**

Die, insb. in einem Fluid messenden, Meßwertaufnehmer verwendete Magnetkreisanordnung umfaßt wenigstens eine im Betrieb von einem Strom durchflossene Spule (13). Des weiteren weist die Magnetkreisanordnung zwei Anker (11, 12) auf, die an einem vibrierenden Aufnehmerrohr (211) bzw. einem zu diesem gegenphasig vibrierenden Aufnehmerrohr (212) des Meßwertaufnehmers fixiert sind. Die Spule (13) ist mittels einer Halterung (15) an einer durch die Aufnehmerrohre (211, 212) gebildeten Doppelrohranordnung (21) schwimmend gehaltert. Außerdem sind die beiden Anker (11, 12) so geformt und zueinander ausgerichtet, daß sich mittels der Magnetkreisanordnung erzeugte Magnetfelder im wesentlichen konzentriert innerhalb derselben ausbreiten, wodurch letztere weitgehend unempfindlich auch gegenüber äußeren Magnetfeldern ist. Die Magnetkreisanordnung zeichnet sich durch eine hohe Lebensdauer und, insb. auch bei einer Anwendung des Meßwertaufnehmers auf Fluide mit hoher und/oder schwankender Fluidtemperatur, durch eine gleichbleibende, hohe Funktionsgenauigkeit aus.

## Beschreibung

Die Erfindung betrifft eine Magnetkreisanordnung, die für eine Verwendung in einem Meßwertaufnehmer vom Vibrations-Typ, insb. einem Coriolis-Massedurchflußaufnehmer, geeignet ist.

Zur Ermittlung eines Massedurchflusses eines in einer Rohrleitung strömenden Fluids, insb. einer Flüssigkeit, werden oftmals Coriolis-Massedurchflußmesser verwendet, die bekanntlich mittels eines entsprechenden Meßwertaufnehmers vom Vibrations-Typ, angetrieben von einer daran angeschlossenen Steuer- und Auswerteelektronik, im Fluid Corioliskräfte bewirken und von diesen abgeleitet ein den Massedurchfluß repräsentierendes Meßsignal erzeugen.

Solche Coriolis-Massedurchflußmesser sind seit langem bekannt und im industriellen Einsatz. So sind z.B. in der US-A 47 56 198, der US-A 48 01 897, der US-A 50 48 350, der US-A 53 01 557, der US-A 53 49 872, der US-A 53 94 758, der US-A 57 96 011, der US-A 61 38 517 oder der EP-A 803 713 Coriolis-Massedurchflußmesser mit jeweils einem Meßwertaufnehmer beschrieben, der umfaßt:
- eine mit der Rohrleitung kommunizierende Doppelrohranordnung mit
   -- einem im Betrieb vibrierenden ersten Aufnehmerrohr und
   -- einem im Betrieb vibrierenden zweiten Aufnehmerrohr,
   -- wobei das vibrierende erste und das vibrierende zweite Aufnehmerrohr gegenphasig zueinander schwingen,
- einen Schwingungserreger zum Antreiben der Aufnehmerrohre sowie
- Schwingungssensoren zum Erfassen einlaßseitiger und auslaßseitiger Schwingungen der Aufnehmerrohre und zum Erzeugen wenigstens eines vom Massedurchfluß beeinflußten elektrischen Sensorsignals,
- wobei der Schwingungserreger und/oder die Schwingungssensoren wenigstens eine Magnetkreisanordnung zum Wandeln elektrischer in mechanische Energie und/oder umgekehrt aufweisen, welche wenigstens eine Magnetkreisanordnung ferner umfaßt:
   - wenigstens eine zumindest zeitweise von einem Strom durchflossene und zumindest zeitweise von einem Magnetfeld durchsetzte Spule,
   - einen am ersten vibrierenden Aufnehmerrohr des Meßwertaufnehmers fixierten ersten Anker und
   - einen am zweiten vibrierenden Aufnehmerrohr des Meßwertaufnehmers fixierten zweiten Anker sowie
   - eine Halterung für die Spule.

Gebogene oder gerade Aufnehmerrohre solcher Meßwertaufnehmer können bekanntlich, im sogenannten Nutzmode zu Biegeschwingungen gemäß einer ersten Eigenschwingungsform angeregt, im hindurchströmenden Fluid Corioliskräfte bewirken. Diese wiederum führen dann dazu, daß den angeregten Biegeschwingungen des Nutzmodes Biegeschwingungen im sogenannten Coriolismode koplanar überlagert werden und dementsprechend die mittels der Schwingungssensoren einlaßseitig und auslaßseitig erfaßten Schwingungen eine auch vom Massedurchfluß abhängige, meßbare Phasendifferenz aufweisen.

Üblicherweise werden die Aufnehmerrohre des Meßwertaufnehmers im Betrieb auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Fluids abhängig ist, kann mittels marktüblicher Coriolis-Massedurchflußmesser neben dem Massedurchfluß auch die Dichte von strömenden Fluiden gemessen werden.

Bei Magnetkreisanordnungen gemäß der US-A 50 48 350 sind sowohl der Anker als auch die zugehörige Spule jeweils direkt an der Doppelrohranordnung fixiert, so daß beide im Betrieb, den Bewegungen der zugehörigen Aufnehmerrohre folgend, praktisch permanent beschleunigt werden. Die daraus resultierenden, nachteilig insb. auf die Spule wirkenden, Trägheitskräfte können dabei in Bereichen von weit über 10 G (= Gewicht) liegen. Selbst Trägheitskräfte von bis zu 30 G sind hierbei nicht ungewöhnlich. Aufgrund dieser hohen mechanischen Beanspruchungen müssen bei derartigen Magnetkreisanordnungen die Spulen, insb. auch deren Wicklungen, hoch belastbar sein, um eine möglichst hohe Lebensdauer der Schwingungserreger, insb. auch eine hohe Schwingspielzahl, bei gleichbleibender Funktionsgenauigkeit gewährleisten zu können.

Bei den Magnetkreisanordnungen z.B. gemäß der US-A 47 56 198, US-A 53 49 872 oder der US-A 61 38 517 wird demgegenüber eine solche mechanische Beanspruchung der Spulen dadurch vermieden, daß diese jeweils von einer betriebsgemäß relativ zu den vibrierenden Aufnehmerrohren ruhenden Haltekonstruktion, z.B. einer Trägerplatte, einem Meßgerätegehäuse oder einem direkt an den Aufnehmerrohren biegeelastisch befestigten Tragrähmchen, in einem nahezu konstanten Abstand zu einer Schwerelinie, hier jeweils einer imaginären Hochachse, der Doppelrohranordnung gehaltert sind.

Es hat sich jedoch gezeigt, daß so zwar die oben beschriebenen mechanischen Beanspruchungen praktisch völlig unterdrückt werden können, daß aber die Funktionsgenauigkeit einer solchen Magnetkreisanordnung durch, insb. temperaturbedingte, Verschiebungen zwischen Haltekonstruktion und Doppelrohranordnung, wie sie z.B. bei Anwendungen mit für Fluide mit in einem weiten Bereich schwankender Fluidtemperatur auftreten, empfindlich gestört sein kann. Aufgrund der dadurch auftretenden naturgemäß unterschiedlichen, nur begrenzt neutralisierbaren Ausdehnungen von Haltekonstruktion und Doppelrohranordnung verschieben sich nämlich die Ruhelagen von Anker und Spule relativ zueinander.

Während bei der Magnetkreisanordnung gemäß der US-A 61 38 517 vor allem ein sehr hoher Temperatur- und somit auch ein sehr hoher Ausdehnungsunterschied zwischen Haltekonstruktion und Doppelrohranordnung auftreten kann, können bei den in der US-A 53 49 872 beschriebenen Magnetkreisanordnungen, deren Magnetfeld, insb. auch im Bereich der Anker, in einem sehr hohen Maße inhomogen ist, bereits geringfügige Störungen zu erheblichen Ungenauigkeit führen. Dies wiederum kann z.B. bei einer Verwendung als Schwingungssensor dazu führen, das die Sensorsignale ein sehr schlechtes Signal-zu-Rausch-Verhältnis und/oder einen sehr hohen Klirrfaktor aufweisen. Des weiteren kann sich das Magnetfeld einer Magnetkreisanordnung gemäß der US-A 53 49 872 einen sehr weiten räumlichen Bereich, also auch benachbarte Komponenten des Meßwertaufnehmers, insb. auch andere derartige Magnetkreisanordnungen und/oder die Aufnehmerrohre mit dem hindurchströmenden Fluid, durchsetzen und so z.B. Störspannungen induzieren. Weitere Nachteile einer solchen Magnetkreisanordnung sind ausführlich z.B. auch in der US-A 61 38 517 erörtert worden.

Zur Gewährleistung einer trotz dieser temperaturbedingten Störeinflüsse auf vorgenannte Magnetkreisanordnungen hohen Funktionsgenauigkeit muß in entsprechender Weise der ohnehin bei solchen Massedurchflußmeßgeräten hohe technische Aufwand zur Kompensation temperaturabhängiger Störungen noch mehr erhöht werden.

Ein Aufgabe der Erfindung besteht daher darin, eine, insb. auch für eine Verwendung in einem Fluid messenden Meßwertaufnehmer vom Vibrations-Typ geeignete, Magnetkreisanordnungen anzugeben, die eine hohe Lebensdauer, insb. auch eine hohe Schwingspielzahl, und die, insb. auch bei einer Anwendung des Meßwertaufnehmers auf Fluide mit hoher und/oder schwankender Fluidtemperatur, eine möglichst gleichbleibende, hohe Funktionsgenauigkeit aufweist. Die erfindungsgemäße Magnetkreisanordnung soll außerdem unempfindlich gegenüber äußeren Magentfeldern sein.

Zur Lösung der Aufgabe besteht die Erfindung in einer Magnetkreisanordnung zum Wandeln elektrischer in mechanischer Energie und/oder umgekehrt, welche Magnetkreisanordnung umfaßt:
- wenigstens eine im Betrieb von einem Strom durchflossene erste Spule,
- einen an einem ersten vibrierenden Aufnehmerrohr eines Meßwertaufnehmers fixierten ersten Anker und
- einen an einem zweiten vibrierenden Aufnehmerrohr des Meßwertaufnehmers fixierten zweiten Anker sowie
- eine am ersten und zweiten Aufnehmerrohr fixierte Halterung für die Spule,
- wobei die beiden Anker so geformt und so zueinander ausgerichtet sind, daß sich mittels der Magnetkreisanordnung erzeugte Magnetfelder im wesentlichen konzentriert innerhalb derselben ausbreiten und
- wobei die erste Spule und wenigstens der erste Anker über ein erstes Magnetfeld miteinander in Wechselwirkung stehen.

Nach einer bevorzugten ersten Ausgestaltung der Erfindung umfaßt die Magnetkreisanordnung eine im Betrieb von einem Strom durchflossene zweite Spule, wobei die zweite Spule und der zweite Anker über ein zweites Magnetfeld miteinander in Wechselwirkung stehen.

Nach einer bevorzugten zweiten Ausgestaltung der Erfindung ist wenigstens der erste Anker so geformt und so zur ersten Spule ausgerichtet, daß sich das erste Magnetfeld zumindest seitlich neben der Spule und, mit einer imaginären Spulenmittelachse im wesentlichen fluchtend, homogenisiert ausbreitet.

Nach einer bevorzugten dritten Ausgestaltung der Erfindung ist jeder der beiden Anker becherförmig ausgebildet.

Nach einer bevorzugten vierten Ausgestaltung der Erfindung ist die erste Spule auf einem ersten Spulenkern angeordnet und sind der erste Spulenkern und der erste Anker so geformt und zueinander ausgerichtet, daß ein zwischen den beiden gebildeter Luftspalt von einem Magnetfluß durchsetzt ist.

Nach einer bevorzugten fünften Ausgestaltung der Erfindung ist jeder der beiden Spulenkerne becherförmig ausgebildet.

Nach einer bevorzugten sechsten Ausgestaltung der Erfindung umfaßt die Halterung eine Tragplatte zum Haltern der wenigstens ersten Spule, wobei die Tragplatte mittels eines am ersten Aufnehmerrohr fixierten, federelastischen ersten Schenkels sowie mittels eines am zweiten Aufnehmerrohr fixierten, federelastischen ersten Schenkels an einer mittels der beiden Aufnehmerrohre gebildeten Doppelrohranordnung schwimmend gehaltert ist.

Nach einer bevorzugten siebenten Ausgestaltung der Erfindung ist die Tragplatte, sich entlang der Doppelrohranordnung erstreckend, einlaßseitig und auslaßseitig jeweils am ersten und zweiten Aufnehmerrohr fixiert.

Nach einer bevorzugten achten Ausgestaltung der Erfindung ist der Meßwertaufnehmer ein Coriolis-Massedurchflußaufnehmer.

Nach einer bevorzugten neunten Ausgestaltung der Erfindung dient die Magnetkreisanordnung als ein die Aufnehmerrohre antreibender Schwingungserreger des Meßwertaufnehmers.

Nach einer bevorzugten zehnten Ausgestaltung der Erfindung dient die Magnetkreisanordnung als ein Schwingungen der Aufnehmerrohre erfassender Schwingungssensor des Meßwertaufnehmers.

Ein Grundgedanke der Erfindung besteht darin, einerseits wenigstens eine der bei derartigen Meßwertaufnehmern, insb. in Coriolis-Massedurchflußaufnehmern oder auch Coriolis-Massedurchfluß/Dichteaufnehmern, üblicherweise verwendeten Magnetkreisanordnungen, also den Schwingungserreger und/oder die Schwingungssensoren, so zu gestalten, daß deren Spulen auch im Betrieb zumindest bezüglich einer Schwerelinie der Doppelrohranordnung, insb. ihrer Hochachse, in einer relativen Ruhelage verharren. Andererseits zielt die Erfindung darauf ab, eine trotzdem gegenüber Temperatureinflüssen weitgehend unempfindliche Magnetkreisanordnung zu schaffen, bei der ein Übergreifen des eigenen Magnetfelds auf andere Komponenten des Meßwertaufnehmers unterdrückt werden kann und die auch selbst gegen andere Magnetfelder wirksam abgeschirmt ist.

Nachfolgend werden die Erfindung und weitere Vorteile anhand von Ausführungsbeispielen erläutert, die in den Figuren der Zeichnung dargestellt sind. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt perspektivisch eine erste Variante einer, insb. für Meßwertaufnehmer vom Coriolis-Typ geeigneten, Magnetkreisanordnung,
- Fig. 2: zeigt die Magnetkreisanordnung gemäß Fig. 1 teilweise geschnitten in einer Vorderansicht,
- Fig. 3: zeigt eine zweite Variante einer, insb. für Meßwertaufnehmer vom Coriolis-Typ geeigneten Magnetkreisanordnung teilweise geschnitten in einer Vorderansicht,
- Fig. 4: zeigt perspektivisch die Magnetkreisanordnung gemäß Fig. 1, verwendet in einem Meßwertaufnehmer mit einer Doppelrohranordnung und
- Fig. 5 und 6: zeigen perspektivisch Ausgestaltungen der erfindungsgemäßen Magnetkreisanordnung, verwendet in einem Meßwertaufnehmer.

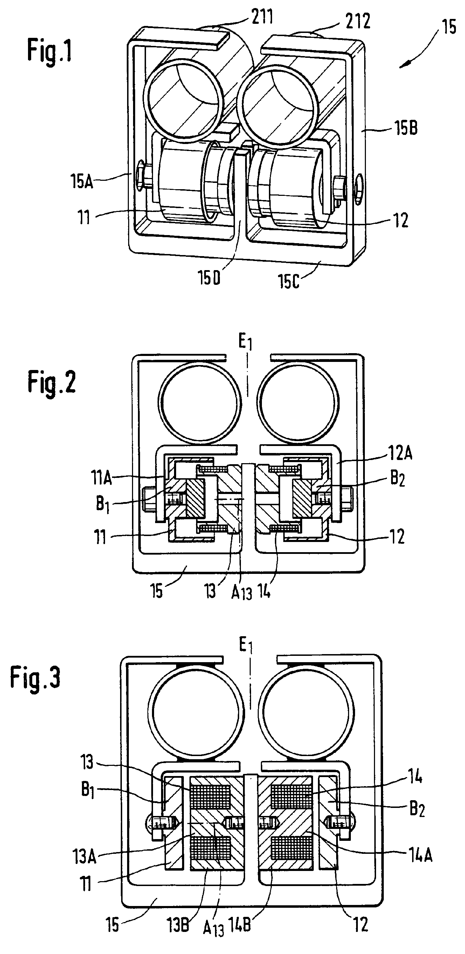

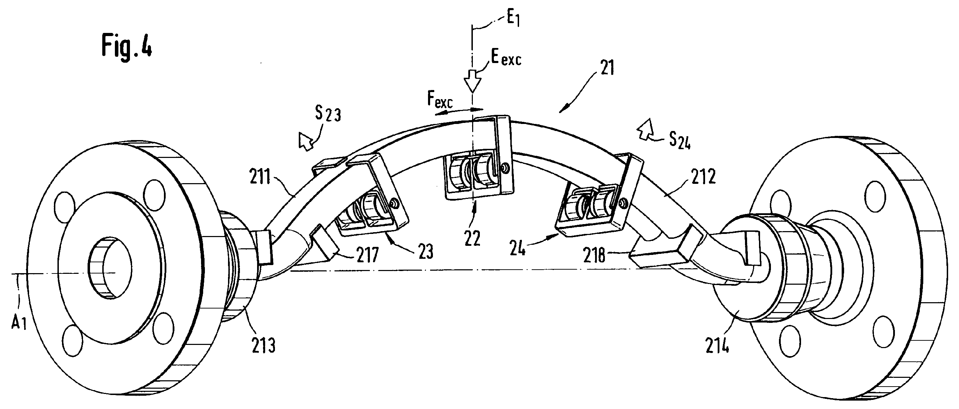

In den Fig. 1 bis 3 sind Ausführungsbeispiele einer, insb. für die Verwendung in einem Coriolis-Massedurchflußmesser oder auch in einem Coriolis-Massedurchfluß/Dichtemesser geeignete, Magnetkreisanordnung zum Wandeln elektrischer in mechanische Energie und/oder, basierend auf dem Induktionsgesetz, zum Wandeln mechanischer in elektrische Energie dargestellt. Ein entsprechendes Ausführungsbeispiel für einen solchen, hier auf einen Massedurchfluß *m* eines in einer nicht dargestellten Rohrleitung strömenden Fluids reagierenden, Meßwertaufnehmer vom Vibrations-Typ ist in der Fig. 4 gezeigt. Ein solcher Massedurchflußaufnehmer dient, als physikalisch-elektrischer Meßwandler in einem Coriolis-Massedurchflußmesser verwendet, bekanntlich dazu, im hindurchströmenden Fluid Corioliskräfte zu erzeugen sowie diese sensorisch zu erfassen und in elektronisch auswertbare Meßsignale umzuwandeln.

Zum Führen des zu messenden Fluids umfaßt der Meßwertaufnehmer eine Doppelrohranordnung 21 mit einem ersten Aufnehmerrohr 211 und einem, insb. zum Aufnehmerrohr 211 identisch geformten, zweiten Aufnehmerrohr 212. Die Aufnehmerrohre 211, 212 können, wie bei derartigen Meßwertaufnehmern üblich, einfach, z.B. U-förmig, oder schleifenförmig gekrümmt sein; falls, erforderlich, können sie aber auch gerade sein.

Die Aufnehmerrohre 211, 212 sind bevorzugt, wie auch in Fig. 4 dargestellt, zueinander so ausgerichtet, daß eine zwischen den beiden, insb. zueinander parallelen, Aufnehmerrohren 211, 212 imaginär verlaufende Mittelebene E₁ praktisch einer ersten Symmetrieebene der Doppelrohranordnung 21 entspricht. Ferner ist die Doppelrohranordnung 21 in vorteilhafter Weise so geformt, daß sie eine die Mittelebene E₁, in der ja auch oben genannte Hochachse liegt, insb. senkrecht, schneidende imaginäre zweite Symmetrieebene aufweist.

Jedes der beiden Aufnehmerrohre 211, 212 mündet einlaßseitig in ein Einlaßverteilerstück 213 und auslaßseitig in ein Auslaßverteilerstück 214. Einlaßverteilerstück 213 und Auslaßverteilerstück 214 sind bei eingebautem Meßgerät jeweils mit einem geraden einlaßseitigen bzw. auslaßseitigen Abschnitt der Fluid führenden Rohrleitung verbunden und daher, wie bei derartigen Meßwertaufnehmern üblich, bevorzugt zueinander und zu einer die beiden imaginär verbindenden Längsachse A₁ der Doppelrohranordnung 21 fluchtend ausgerichtet. Für den Fall, daß der Meßwertaufnehmer lösbar in die Rohrleitung zu montieren ist, ist bevorzugt dem Einlaßverteilerstück 213 ein erster Flansch 215 und dem Auslaßverteilerstück 214 ein zweiter Flansch 216 angeformt; falls erforderlich können Einlaßverteilerstück 213 und Auslaßverteilerstück 214 aber auch direkt mit der Rohrleitung z.B. mittels Schweißung oder Hartlötung, verbunden werden.

Im Betrieb des Meßwertaufnehmers werden die Aufnehmerrohre 211, 212, wie bereits erwähnt, im Nutzmode zu Biegeschwingungen, insb. auf einer natürlichen Resonanzfrequenz eines Eigenmodes, angeregt, und zwar so, daß, wie bei derartigen Meßwertaufnehmern üblich, das Aufnehmerrohr 211 gegenphasig zum Aufnehmerrohr 212 vibriert. Die somit im hindurchströmenden Fluid induzierten Corioliskräfte bewirken bekanntlich eine, auch als Coriolismode bezeichnete, zusätzliche elastische Verformung des Aufnehmerrohrs 211 bzw. 212, die, den angeregten Schwingungen des Nutzmodes überlagert, auch vom zu messenden Massedurchfluß m abhängig ist.

Falls erforderlich, können allfällige, von den vibrierenden Aufnehmerrohren 211, 212 im Einlaßverteilerstück 213 und Auslaßverteilerstück 214 verursachte mechanische Spannungen z.B. dadurch minimiert werden, daß die Aufnehmerrohre 211, 212, wie bei derartigen Aufnehmern üblich, einlaßseitig mittels wenigstens einer ersten Knotenplatte 217 und auslaßseitig mittels wenigstens einer zweiten Knotenplatte 218 miteinander mechanisch verbunden sind.

Zum Antreiben der Aufnehmerrohre 211, 212 umfaßt der Meßwertaufnehmer mindestens einen Schwingungserreger 22. Dieser dient dazu, eine, von einer nichtdargestellten Steuer-Elektronik z.B. des oben genannten Massedurchflußmessers eingespeiste, elektrische Erregerenergie *E*_{*exc*} in solche, z.B. pulsierenden oder harmonischen, Erregerkräfte *F*_{*exc*} umzuwandeln, die symmetrisch, also gleichzeitig, gleichmäßig jedoch gegensinnig, auf Aufnehmerrohr 211 und 212 einwirken und somit die zueinander gegenphasigen Schwingungen der Aufnehmerrohre 211, 212 erzeugen. Die Erregerkräfte *F*_{*exc*} können in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden, vgl. hierzu auch die US-A 48 01 897.

Zum Erfassen von Schwingungen der vibrierenden Aufnehmerrohre 211, 212 weist der Meßwertaufnehmer ferner einen einlaßßseitigen ersten Schwingungssensor 23 und einen auslaßseitigen zweiten Schwingungssensor 24 auf, welche beiden Schwingungssensoren 23, 24 auf Bewegungen der Aufnehmerrohre 211, 212, insb. deren laterale Auslenkungen, reagierend, ein entsprechendes erstes bzw. zweites Schwingungssignal S₂₃, S₂₄ liefern.

Bei Meßwertaufnehmern der beschriebenen Art kann die erfindungsgemäße Magnetkreisanordnung z.B. als Schwingungserreger 22 verwendet, zum Erzeugen der die Aufnehmerrohre 211, 212 antreibenden Erregerkräfte *F*_{*exc*} dienen. Des weiteren kann die Magnetkreisanordnung, wie bereits erwähnt, dem Erfassen der Bewegungen der Aufnehmerrohre 211, 212 und zum Erzeugen der Schwingungssignale S₂₃ oder S₂₄ dienend, z.B. auch als Schwingungssensor 23 bzw. 24 verwendet werden.

Zum Umwandeln mechanischer bzw. elektrischer Energie weist die Magnetkreisanordnung wenigstens eine im Betrieb von einem Strom durchflossene erste, bevorzugt zylindrische, Spule 13 auf, die mittels einer Halterung 15 an der Doppelrohranordnung 21 befestigt ist. Bevorzugt ist neben der Spule 13 ferner, insb. mit dieser fluchtend, eine zweite Spule 14 an der Halterung 15 fixiert.

Des weiteren umfaßt die Magnetkreisanordnung einen am Aufnehmerrohr 211 fixierten, im Betrieb mit der stromdurchflossenen Spule 13 über ein erstes Magnetfeld *B*_{*1*} in Wechselwirkung stehenden, ersten Anker 11. Außerdem ist am Aufnehmerrohr 212 ein, insb. zum Anker 11 identisch geformter, zweiter Anker 12 fixiert, der z.B. über ein zweites Magnetfeld *B*_{*2*} mit der Spule 14 in Wechselwirkung stehen kann. Das Magnetfeld *B*_{*1*} kann hier z.B. ein mittels der Spule 13 erzeugtes Wechselfeld, dem ggf. ein mittels des Ankers 11 erzeugtes Gleichfeld aufmoduliert ist; in analoger Weise kann das Magnetfeld *B*_{*2*} z.B. mittels der Spule 14 und des Ankers 12 erzeugt werden.

Die beide Anker 11, 12 dienen ferner dazu, mittels der Magnetkreisanordnung erzeugte Magnetfelder, insb. das Magnetfeld *B*_{*1*} und ggf. das Magnetfeld *B*_{*2*}, auch außerhalb der Spule 13, zu homogenisieren und so zu führen, daß diese auf einen möglichst engen räumlichen Bereich konzentriert sind, der sich im wesentlichen innerhalb der Magnetkreisanordnung selbst erstreckt. Ferner dienen die Anker 11, 12 auch dazu, vorgenannte Magnetfelder so zu formen und zu führen, daß sie auch in Luft eine möglichst hohe, insb. konstante, Flußdichte aufweisen. Die Anker 11, 12 bestehen daher bevorzugt zumindest anteilig aus ferromagnetischen Material, das bekanntlich eine sehr hohe magnetische Leitfähigkeit aufweist und somit eine Magnetfelder konzentrierende Wirkung besitzt.

Nach einer bevorzugten Ausgestaltung der Erfindung dient der Anker 11 auch zur Erzeugung eines permanenten Gleichanteils des Magnetfelds *B*_{*1*}*;* in analoger Weise wird mittels des Ankers 12 bevorzugt ein permanenter Gleichanteil des Magnetfelds *B*_{*2*} erzeugt. Insbesondere für diesen Fall bestehen die Anker 11, 12 zumindest anteilig aus einem hartmagnetischen, also vormagnetisierbaren, Material, wie z.B. AlNiCo, NyFeB, SmCo oder einer anderen Seltene-Erde-Legierung. Ferner kann als Material für diese Ausgestaltung der Anker 11, 12 aber auch erheblich kostengünstigerer Automatenstahl oder Baustahl verwendet werden.

Wie z.B. in den Fig. 1 bis 3 dargestellt, ist der Anker 11 mittels eines anmontierten, biegesteifen ersten Winkelstücks 11A am Aufnehmerrohr 211 und der Anker 12 mittels eines anmontierten, biegesteifen zweiten Winkelstücks 12A am Aufnehmerrohr 212 starr fixiert. Die Winkelstücke 11A, 12A können mit dem Aufnehmerrohr 211 bzw. 212 z.B. wiederum verschweißt oder hartverlötet sein.

Die Spule 13, ggf. auch die Spule 14, ist, wie z.B. in der Fig. 1 gezeigt, mittels der Halterung 15 an beiden Aufnehmerrohren 211, 212 angebracht, und zwar so, daß eine Symmtrieachse der Magnetkreisanordnung praktisch parallel zur Mittelebene E₁ der Doppelrohranordnung 21 liegt. Die Halterung 15 ist dazu bevorzugt mit einem ersten Schenkel 15A am Aufnehmerrohr 211 und mit einem im wesentlichen gleichgeformten zweiten Schenkel 15B am Aufnehmerrohr 212 fixiert. Des weiteren sind die beiden, insb. federelastischen, Schenkel 15A, 15B über eine Tragplatte 15C am der Doppelrohranordnung 21 jeweils abgewandten Ende, bevorzugt starr, miteinander verbunden. Die Halterung 15 kann sowohl einstückig, z.B. aus einem Stanz-Biegteil, oder mehrstückig hergestellt sein. Als Material für die Halterung 15 können z.B. dieselben Werkstoffe wie für die Aufnehmerrohre 211, 212 verwendet werden.

Für den Fall, daß die Aufnehmerrohre 211, 212 in der oben beschriebenen Weise zueinander gegenphasig vibrieren, wird die Halterung 15, insb. durch Ausbiegen der an den Aufnehmerrohren 211, 212 befestigten Schenkel 15A, 15B, zwar verformt, ihre Symmetrieachse behält jedoch ihre Lage bezüglich der Mittelebene E₁ im wesentlichen bei. Somit ist auch die von der Tragplatte 15C, z.B. mittels eines an diese angeformten Steg 15D, gehalterte Spule 13, praktisch schwimmend an der Doppelrohranordnung 21 befestigt und bezüglich der Mittelebene E₁ stets in einem im wesentlichen konstanten Abstand gehalten.

Um eine Beeinflussung der Schwingungsform der vibrierenden Aufnehmerrohre 211, 212 durch die Halterung 15 zu vermeiden, ist diese entsprechend biegeweich auszuführen. Dazu können z.B. die betriebsgemäß mitschwingenden Schenkel 15A, 15B aus entsprechend dünnen Blechstreifen gefertigt sein.

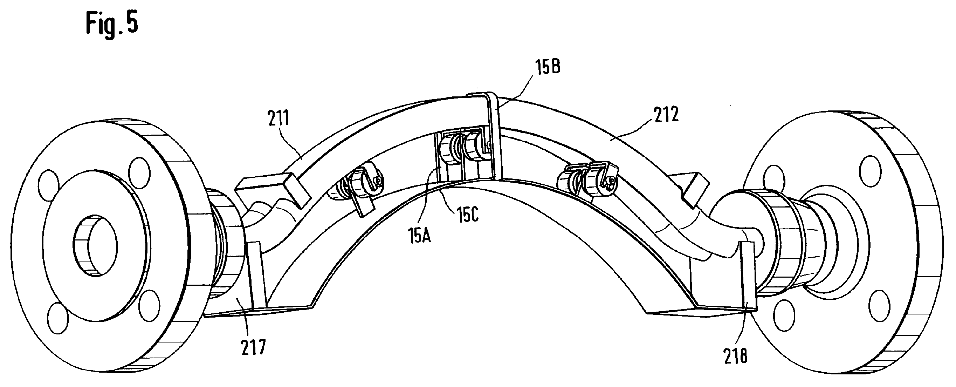

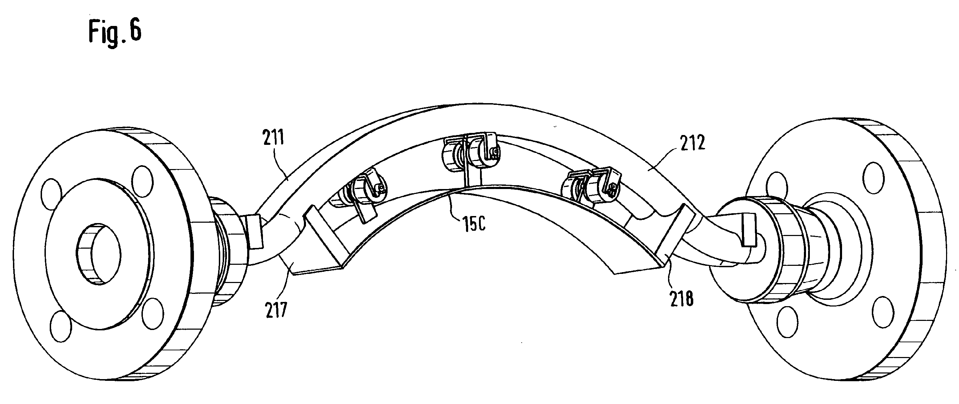

Nach einer weiteren bevorzugten Ausgestaltung der Erfindung ist die Tragplatte 15C, wie in der Fig. 5 oder 6 schematisch dargestellt, so ausgeformt und an den Aufnehmerrohren 211, 212 befestigt, daß sie sich, im wesentlichen parallel zu diesen verlaufend, praktisch entlang der gesamten Doppelrohranordnung 21 erstreckt. Die Trägerplatte 15C ist hierbei in vorteilhafter Weise einlaßseitig bzw. auslaßseitig direkt an der jeweiligen Knotenplatte 217 bzw. 218 befestigt. Es hat sich hier überraschenderweise gezeigt, daß bei parallel zur Mittelebene E₁ verlaufenden, z.B. thermisch bedingten, Ausdehnungen der Aufnehmerrohren 211, 212, die so fixierte Halterung 15 diesen Ausdehnungen soweit folgen kann, daß eine allfällige, relative Verschiebung zwischen Halterung 15 und Doppelrohranordnung 21 von vernachlässigbar geringem Ausmaß ist.

Ein besonderer Vorteil dieser Ausgestaltung der Erfindung ist darin zu sehen, daß auf eine dann zusätzliche Fixierung der Halterung 15 an der Doppelrohranordnung 21 via Schenkel 15A, 15B vollständig verzichtet werden kann, vgl. Fig. 6.

Nach einer ersten Variante der Erfindung ist die Magnetkreisanordnung vom elektrodynamischen Typ, also eine solche Magnetkreisanordnung, bei der ein zu einer Leiterschleife geformter elektrischer Leiter, z.B. die Spule 13, von einem mittels wenigstens einem Dauermagneten erzeugten Magnetfeld, insb. senkrecht, durchsetzt ist und bei der Leiterschleife und Dauermagnet relativ zueinander bewegt werden. Dazu ist an der Doppelrohranordnung 21 mittels der Halterung 15 die Spule 13 bevorzugt so angebracht, daß sie mit einer Spulenmittelachse A₁₃ im wesentlichen senkrecht zur Mittelebene E₁ ausgerichtet ist.

Zum Homogenisieren des Magnetfelds des Magnetfelds *B*_{*1*} bzw. *B*_{*2*} und zum Einstellen einer, insb. auch außerhalb der Anker 11, 12, möglichst hohen Flußdichte ist nach einer bevorzugten Ausgestaltung der ersten Variante der Erfindung jeder der beiden Anker 11, 12, wie in den Fig. 1 und 2 eher schematisch dargestellt, inform eines Bechers ausgeführt, dessen jeweiligem Becherboden ein zur jeweiligen Becherwand koaxial ausgerichteter, insb. auch hartmagnetischer, Stab angeformt ist.

Nach einer bevorzugten Ausgestaltung der ersten Variante sind die Anker 11, 12, wie bei derartigen Magnetkreisanordnungen üblich, bevorzugt zumindest anteilig, z.B. im Bereich der oben erwähnten Becherwand, aus weichmagnetischen Werkstoffen, z.B.. Ferrit oder Corovac, gefertigt.

Nach einer zweiten Variante der Erfindung ist die Magnetkreisanordnung vom elektromagnetischen Typ, also eine solche Magnetkreisanordnung, bei der zwei relativ zueinander bewegliche ferromagnetische Körper so zueinander angeordnet sind, daß wenigstens ein zwischen den beiden gebildeter, veränderlicher Luftspalt, von einem, insb. homogenisierten, Magnetfeld hoher Flußdichte durchsetzt ist, vgl. hierzu insb. auch die EP-A 803 713.

Bei dieser zweiten Variante der Erfindung umfaßt die Magnetkreisanordnung ferner einen an der Halterung 15 fixierten ferromagnetischen ersten Spulenkern 13A für die Spule 13. Der Spulenkern 13A ist, wie in Fig. 3 dargestellt, die Spule 13 zumindest teilweise durchstossend, gegenüber dem Anker 11 und von diesem beabstandet in der Magnetkreisanordnung untergebracht. Spulenkern 13A und Anker 11 dienen bei dieser zweiten Variante der Erfindung dazu, einen veränderlichen ersten Luftspalt zu erzeugen, über den sich zumindest teilweise das Magnetfeld *B*_{*1*} erstreckt. Bevorzugt weist die Magnetkreisanordnung außerdem einen ebenfalls an der Halterung 15, vom Anker 12 beabstandet fixierten ferromagnetischen zweiten Spulenkern 14A für die Spule 14 auf. Mittels Spulenkern 14A und Anker 12 wird somit ein veränderlicher zweiter, insb. vom Magnetfeld *B*_{*2*} durchsetzter, Luftspalt gebildet.

Zum Erzeugen permanenter Gleichanteile der Magnetfelder und zur Unterdrückung von Wirbelströmen in der Magnetkreisanordnung besteht jeder der Spulenkerne 13A, 14A bevorzugt zumindest anteilig aus einem hartmagnetischen, jedoch elektrisch schlecht leitenden, Material, wie z.B. einer der bereits erwähnten Seltene-Erde-Legierungen AlNiCo, NyFeB, SmCo etc.

Zum Einstellen eines auch außerhalb des Spulenkerns 13A möglichst niedrigen magnetischen Widerstands für das Magnetfeld *B*_{*1*} ist nach einer bevorzugten Ausgestaltung der zweiten Variante der Erfindung dem Spulenkern 13A, wie in der Fig. 3 dargestellt, ein außerhalb der Spule 13 verlaufendes ferromagnetisches erstes Joch 13B angeformt; in dazu analoger Weise kann z.B. dem Spulenkern 14A ein zur Spule 14 benachbart verlaufendes ferromagnetisches, insb. zum Joch 13B identisches, zweites Joch 14B für das Magnetfeld *B*_{*2*} angeformt sein. In vorteilhafter Weise können für die Herstellung des Jochs 13B bw. 14B, wie bei derartigen Magnetkreisanordnungen üblich, wiederum weichmagnetische Materialien, z.B. Ferrit oder Corovac, verwendet werden.

Nach einer bevorzugten Ausgestaltung der Erfindung sind der Spulenkern 13A und das Joch 13B so ausgeformt und so zueinander ausgerichtet, daß eine den Luftspalt berührende freie Stirnfläche des Spulenkern 13A und eine den Luftspalt berührende freie Stirnfläche des Jochs 13B im wesentlichen eben und zueinander koplanar sind. In entsprechender Weise ist eine den Luftspalt berührerende freie Stirnfläche des Ankers 11 dann bevorzugt auch eben geformt. Für diesen Fall kann letztere z.B. auch parallel zu den ihr gegenüberliegenden freien Stirnflächen von Spulenkern 13A und Joch 13B ausgerichtet sein. Selbstverständlich können der Anker 11, der Spulenkern 13A und das Joch 13B, falls erforderlich, nach dem Tauchankerprinzip aufgebaut sein.

Nach einer weiteren bevorzugten Ausgestaltung der zweiten Variante der Erfindung ist das Joch 13B als ein, insb. koaxial zur Spule 13 ausgerichteter, Spulenbecher ausgebildet, vgl hierzu auch EP-A 803 713.

Weitere Einzelheiten und Ausgestaltungen hinsichtlich des Betriebs einer Magnetkreisanordnug gemäß der zweiten Variante der Erfindung oder hinsichtlich Form und Anordnung von Spule 13 und Joch 13B und ggf. von Spule 14 und Joch 14B sind z.B. in der eigenen Anmeldung EP-A 803 713 dargestellt, die daher als dem Offenbarungsgehalt dieser Anmeldung zugehörig erachtet wird.

## Patentansprüche

1. Magnetkreisanordnung zum Wandeln elektrischer in mechanischer Energie und/oder umgekehrt, welche Magnetkreisanordnung umfaßt:
- wenigstens eine im Betrieb von einem Strom durchflossene erste Spule (13),
- einen an einem ersten vibrierenden Aufnehmerrohr (211) eines Meßwertaufnehmers fixierten ersten Anker (11) und
- einen an einem zweiten vibrierenden Aufnehmerrohr (212) des Meßwertaufnehmers fixierten zweiten Anker (12) sowie
- eine am ersten und zweiten Aufnehmerrohr (211, 212) fixierte Halterung (15) für die Spule (13),
- wobei die beiden Anker (11, 12) so geformt und so zueinander ausgerichtet sind, daß sich mittels der Magnetkreisanordnung erzeugte Magnetfelder im wesentlichen konzentriert innerhalb derselben ausbreiten und
- wobei die erste Spule (13) und wenigstens der erste Anker (11) über ein erstes Magnetfeld miteinander in Wechselwirkung stehen.

2. Magnetkreisanordnung nach Anspruch 1,
- die eine im Betrieb von einem Strom durchflossene zweite Spule (14) umfaßt
- wobei die zweite Spule (14) und der zweite Anker (12) über ein zweites Magnetfeld miteinander in Wechselwirkung stehen.

3. Magnetkreisanordnung nach Anspruch 1 oder 2, bei der die wenigstens der erste Anker (11) so geformt und so zur ersten Spule (13) ausgerichtet ist, daß sich das erste Magnetfeld zumindest seitlich neben der Spule (13) und, mit einer imaginären Spulenmittelachse (A₁₃) im wesentlichen fluchtend, homogenisiert ausbreitet.

4. Magnetkreisanordnung nach einem der Ansprüche 1 oder 3, bei jeder der beiden Anker (11, 12) becherförmig ausgebildet ist.

5. Magnetkreisanordnung nach Anspruch 1 oder 2,
- bei der die erste Spule (13) auf einem ersten Spulenkern (13A) angeordnet ist und
- bei der der erste Spulenkern (13A) und der erste Anker (11) so geformt und zueinander ausgerichtet sind, daß ein zwischen den beiden gebildeter Luftspalt von einem Magnetfluß durchsetzt ist.

6. Magnetkreisanordnung nach Anspruch 5, bei der jeder der beiden Spulenkerne (13A, 14A) becherförmig ausgebildet ist.

7. Magnetkreisanordnung nach einem der Ansprüche 1 bis 6,
- bei der die Halterung (15) eine Tragplatte (15C) zum Haltern der wenigstens ersten Spule (13) umfaßt,
- wobei die Tragplatte (15C)
-- mittels eines am ersten Aufnehmerrohr (211) fixierten, federelastischen ersten Schenkels (15A) sowie
-- mittels eines am zweiten Aufnehmerrohr (212) fixierten, federelastischen ersten Schenkels (15A)
an einer mittels der Aufnehmerrohre (211, 212) gebildeten Doppelrohranordnung (21) schwimmend gehaltert ist.

8. Magnetkreisanordnung nach Anspruch 7, bei der die Tragplatte (15C), sich entlang der Doppelrohranordnung (21) erstreckend, einlaßseitig und auslaßseitig jeweils am ersten und zweiten Aufnehmerrohr (211, 212) fixiert ist.

9. Magnetkreisanordnung nach einem der Ansprüche 1 bis 7, bei der der Meßwertaufnehmer ein Coriolis-Massedurchflußaufnehmer ist.

10. Verwendung der Magnetkreisanordnung nach einem der Ansprüche 1 bis 9 als einen die Aufnehmerrohre (211, 212) antreibenden Schwingungserreger (22) des Meßwertaufnehmers.

11. Verwendung der Magnetkreisanordnung nach einem der Ansprüche 1 bis 9 als einen Schwingungen der Aufnehmerrohre (211, 212) erfassenden Schwingungssensor (23) des Meßwertaufnehmers.
